# EUROPÄISCHE PATENTSCHRIFT

(11) **EP 1 738 988 B1**
(45) Veröffentlichungstag und Bekanntmachung des Hinweises auf die Patenterteilung: **19.12.2012**
(21) Anmeldenummer: 06013338.6
(22) Anmeldetag: 28.06.2006
(51) Int. Cl.: B62D 11/00

(54) **Einrichtung zum Umsteuern einer Lenkung**
Steering input reversing device
Commande de direction réversible

(30) Priorität: 30.06.2005 DE 102005030495
(43) Veröffentlichungstag der Anmeldung: 03.01.2007
(73) Patentinhaber: Rheinmetall Landsysteme GmbH, 24107 Kiel (DE)
(72) Erfinder: Lumkowsky, Frank, 24229 Dänischenhagen (DE); Oetjens, Manfred, 24229 Schwedeneck (DE)
(74) Vertreter: Dietrich, Barbara

(56) Entgegenhaltungen:
- DE-A1- 2 948 214
- DE-C1- 19 606 793

## Beschreibung

Die Erfindung betrifft eine Lenksinn-Umschalteinrichtung, welche zwischen einer Lenkung und einem, Antriebsräder eines Fahrzeugs antreibende Getriebe eingebunden ist, für insbesondere Gleis- und Kettenfahrzeuge.

Das Lenken von Gleis- bzw. Kettenfahrzeugen erfolgt in der Regel durch ein hydrodynamisches Lenkgetriebe, das als Teil des Fahrzeugantriebs ausgebildet ist. Durch diese Lenkgetriebe werden die Antriebsräder der Gleisketten jeder Fahrzeugseite entsprechend der auszuführenden Kurvenbewegung des Fahrzeugs, bei Vorwärts- und Rückwärtsfahrt angetrieben. Das Lenkgetriebe wird vom Lenkrad aus über eine Welle und ein Betätigungsgestänge, das auf Steuerventile des Getriebes einwirkt, betätigt. Hierdurch wird es entsprechend der zu fahrenden Kurve beeinflusst, indem die Ketten mit unterschiedlicher Geschwindigkeit über die Kettenräder angetrieben werden. Durch die Ausbildung des Lenkgetriebes ist es zum Fahren einer Kurve, beispielsweise einer Rechtskurve, bei Vorwärts- oder Rückwärtsfahrt erforderlich, dass das Lenkrad bei Rückwärtsfahrt entgegen der Lenkbewegung bei Vorwärtsfahrt gedreht wird. Diese ungleichsinnige Lenkbewegung führt in der Praxis leicht zu einer Fehlbedienung, was Unfälle auslösen kann, da die Fahrzeuglenkung bei Rad- und herkömmlichen Fahrzeugen für Vorwärts- als auch Rückwärtsfahrt gleichsinnig ist.

Die DT 1 505 677 C3 beinhaltet eine Fahr- und Lenkbetätigungseinrichtung des hydrostatischen Antriebs für ein Fahrzeug wie Gleiskettenfahrzeug, bei dem jede Fahrzeugseite durch ein hydrostatisches Getriebe angetrieben wird. Vorgesehen ist, dass erst wenn der Fahrhebel geschwenkt wird, auch ein Lenkeinschlag möglich ist. Mit der Lenkung verbunden sind Pumpen, durch die Druckmittel zu den hydrostatischen Motoren gefördert wird. Beim Umschalten von einer Kurvenfahrt, beispielsweise Linkskurve vorwärts, in eine andere, beispielsweise rückwärts, ändert sich dabei die Fahrgeschwindigkeit derart, dass sie von einem bestimmten Wert an stetig verzögert wird auf 0, wenn der Fahrhebel in Neutralstellung steht, und dann wieder beschleunigt wird belm Einschwenken des Fahrhebels in die Rückwärtsfahrtrichtung.

In der DE 29 48 214 C2 wird eine weitere Vorrichtung zum Steuern einer Lenkung für Gleiskettenfahrzeuge beschrieben. Diese umfasst ein Umschaltelement, das drehbar mit der Lenksäule verbunden ist.

Die in der DE 38 19 446 C2 aufgezeigte Vorrichtung zur Umschaltung von Lenkgetrieben besitzt eine örtlich zugeordnete Anlenkung des Lenkgestänges an das Lenkrad, so dass die Lenkumschaltung ohne große Schwenkräume ausgebildet werden kann.

Eine Vorrichtung zum Steuern einer Lenkung für Gleiskettenfahrzeugen ist auch aus der DE 42 10 728 A1 bekannt. Diese umfasst einen Umlenkhebel, der mit dem Lenkrad drehbar verbunden ist und um eine Schwenkachse in einem Lagerbock der Lenksäule in einer Stellung zum Rückwärtsfahren und in eine weitere Stellung zum Vorwärts fahren verschwenkbar ist.

Der DE 196 06 793 C1 ist eine gattungsgemäße Vorrichtung zur Lenksinnumkehr bei Kettenfahrzeugen entnehmbar, bei der die Lenksinnumkehr ohne Umlenkhebel bewerkstelligt wird. Dazu ist der Lenkungszug direkt an einem axial verschiebbaren Schlitten befestigt. Der Schlitten wird von einem doppelt wirkenden Zylinder je nach Fahrtrichtungswahl in eine der beiden Endpositionen verschoben. Der Lenkungszug oder die Betätigungsstange ist mit einem Lagerbolzen verbunden bzw. verschraubt, der gleichzeitig mittels vier Lagerstellen in einer Doppel-Nut des Schwenkkörpers und gleichzeitig des Schlittens geführt wird. Dadurch wird die Drehbewegung bei Lenkausschlag in eine Längsbewegung umgewandelt und auf das Lenkgestänge bzw. den Lenkungszug übertragen.

Mit der DE 196 14 723 A1 wird eine Vorrichtung zum Ansteuern einer Lenkung von Fahrzeugen offenbart, die eine Lenkumkehr bei Fahrzeugen mit einer unveränderlichen Lenkgeometrie, insbesondere von Kettenfahrzeugen beinhaltet und ein Umschaltelement umfasst. Dieses ist drehbar mit einer Lenkachse verbunden. Ein Verstellmittel übemimmt die Aufgabe des Verschwenkens des Umschaltelements in zwei Arbeitssteltungen um eine Achse quer zur Lenkdrehachse. Im Umschaltelement werden zwei Gasfedern über eine verbindbare Zugstrebe gehalten, wobei die Zugstrebe symmetrisch zur Lenksachse angeordnet ist.

Die bekannten Lösungen weisen den gemeinsamen Nachteil auf, dass sie den gültigen Sicherheitsstandards durch mechanischen Verschleiß etc. nicht mehr entsprechen. Zudem sind die Schaltstellungen bei den häufigsten Vorrichtungen oft auf zwei begrenzt.

Hier stelit sich die Erfindung die Aufgabe, die Nachteile zu beheben.

Gelöst wird die Aufgabe durch die Merkmale des Patentanspruchs 1. Vorteilhafte Lösungen sind in den Unteransprüchen aufgezählt.

Der Erfindung liegt die Idee zugrunde, eine Lenksinn- Umschalteinrichtung zwischen einer Lenkung und einem Lenkgetriebe einzubinden und die wesentlichen Teile dieser Lenksinn-Umschalteinrichtung von der Lenkbewegung vollständig zu entkoppeln. Dies hat den Vorteil, dass, wie bei herkömmlichen Fahrzeugen, bei Kurvenfahrten für die Vorwärtsfahrt als auch die Rückwärtsfahrt das Lenkrad gleichsinnig verstellt wird.

Die Lenksinn-Umschalteinrichtung besteht im Wesentlichen aus drei Unterbaugruppen, nämlich einer Kulisse, z. B. einer Exenterkulisse, mit Führung und Rastmechanismus, einer Schaltklaue mit Lagerung, Schaltlager und Kurbelanlenkung sowie einer Anlenkstange mit Kugelköpfen an den Enden und einen Anlenkhebel, der die Bewegung an ein hydrodynamisches Getriebe weitergibt. Dadurch, dass Komponente der Umschaltung von der Lenkbewegung vollständig entkoppelt werden, sind keine dieser Komponente an der Lenkwelle adaptiert, die bei einem Lenkausschlag mitbewegt werden müssten.

In Weiterbildung der Erfindung wird neben den Schaltstellungen Vorwärts / Rückwärts auch eine Neutralstellung eingebunden. Die drei Schaltstellungen sind rastend ausgelegt und in den Stellungen Vorwärts / Rückwärts selbst hemmend, so dass äußere Krafteinwirkungen aufgrund der Totpunktlage (0° / 180°) der Exzenteranlenkung unwirksam bleiben. In vorteilhafter Weise kann auf Federelemente für die Fixierung der Betätigungselemente verzichtet werden.

Die Vorrichtung ist nicht nur auf Gleis- und Kettenfahrzeuge beschränkt, sondern auch für Fahrzeuge mit beidseitig angeordneten und getrennt abgetriebenen Antriebsrädern verwendbar.

Anhand eines Ausführungsbeispiels mit Zeichnung soll die Erfindung näher erläutert werden.

Es zeigt:
- Fig. 1: eine Lenksinn-Umschalteinrichtung mit Lenksinn "Neutral",
- Fig. 2, 3: die Lenksinn-Umschalteinrichtung mit Schaltstellung "oben" und Lenksinn "Vorwärts".
- Fig. 4, 5: die Einrichtung mit Schaltstellung "unten" und Lenksinn "Rückwärts".

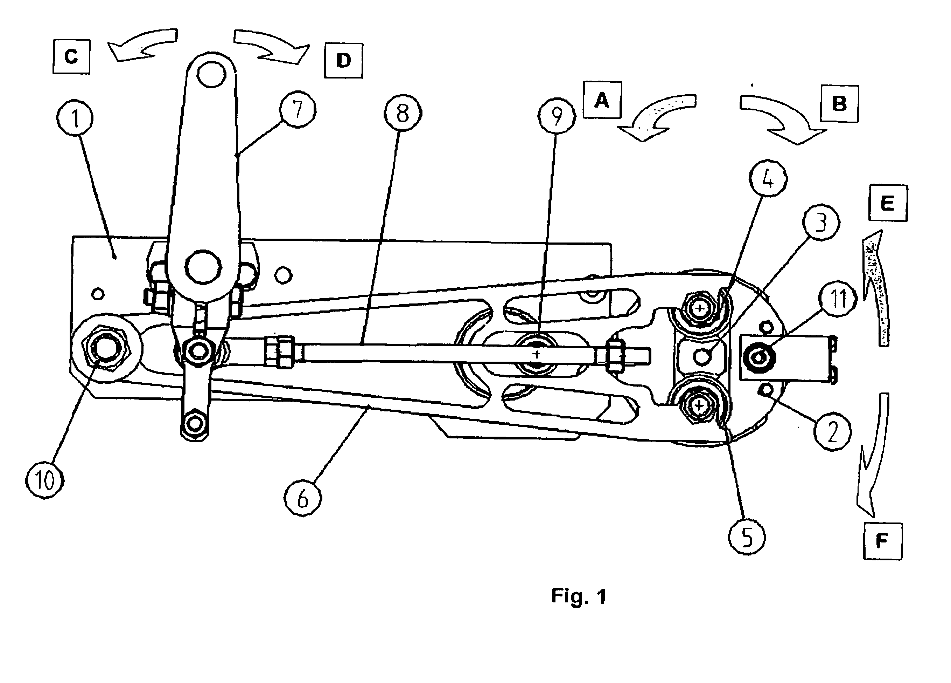

Fig. 1 bis 5 zeigen eine Lenksinn - Umschalteinrichtung 20, die eine Kulisse 3 mit Führung 2 sowie einen Rastmechanismus 11 aufweist. Die Kulisse 3 befindet sich am Ende einer nicht näher dargestellten Lenkwelle eines Lenkrades, wobei die Führung 2 fest mit dieser Lenkwelle verbunden ist und die Lenkbewegung auf die nachgeschaltete Mechanik übertragen wird. Mit der Kulisse 3 wirken ein oberes Schaltlager 4 sowie ein unteres Schaltlager 5 einer Schaltklaue 6 funktional zusammen. Das untere Schaltlager 5 der Schaltklaue 6 befindet sich mit seiner Mittellage fluchtend zur Mittelachse der Lenkwelle. Die Kulisse 3 ist in ihrer Auslenkung mechanisch durch das Nutende in der Führung 2 und durch eines der Schaltlager 4, 5 eingespannt. Die Schaltklaue 6 steht ihrerseits über eine Kurbelanlenkung 9 mit einer Anlenkstange 8 und deren zwei Kugelköpfen an den Enden und über einen Anlenkhebel 7 mit einem nicht näher dargestellten hydrodynamischen Getriebe funktional in Verbindung. Exzentrizität gegenüber der Lenkachse bei Lenkeinschlag Mit 10 ist der Schaltklauendrehpunkt der Schaltklaue 6 gekennzeichnet. Die Lenksinn-Umschalteinrichtung 20 ist beispielsweise am fahrzeugeigenen Chassis 1 befestigt.

### Die Funktionsweise der Lenksinn-Umschalteinrichtung 20 ist wie folgt:

Fig. 1 zeigt die Lenksinn-Umschalteinrichtung 20 in der Schaltstellung "mittig", mit Lenksinn "neutral" und einem Lenkwinkel von 0°. Dazu ist die Kurbelanlenkung 9 in eine Mittellage verschwenkt, so dass sich die Schaltklaue 6 ebenfalls in Mittellage und der Knaggen der Kulisse 3 (hier einer Exenterkulisse) fluchtet mit der Mittelachse der nicht näher dargestellten Lenkwelle, so dass über die Knaggenform die Lenkbewegung automatisch über die beiden Schaltlager 4, 5 geometrisch auf wenige Grad beschränkt ist. In dieser Stellung wird Ober den internen Rastmechanismus 11 die Exenterkulisse 3 wie auch die Endlagen automatisch fixiert. Durch diese Mittelarretierung wird verhindert, dass eine unbeabsichtigte Lenkbewegung am Lenkrad ein Drehen oder Auswandern des nicht näher dargestellten Fahrzeugs bei Stillstand nicht wirksam wird, da der das Getriebe betätigende Anlenkhebel 7 keine Schwenkbewegung und somit keine Getriebeansteuerung zulässt.

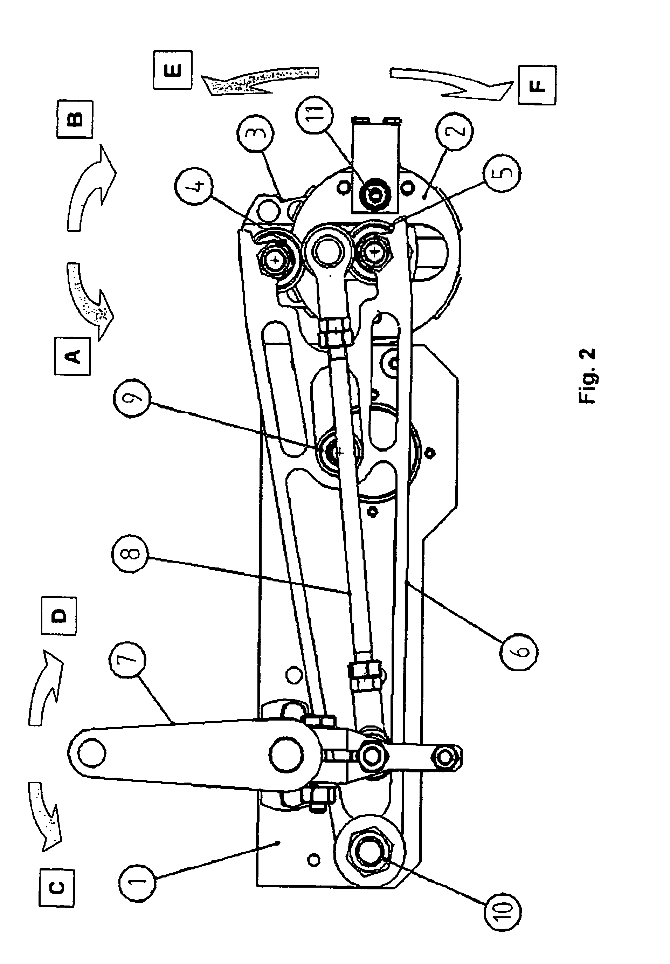

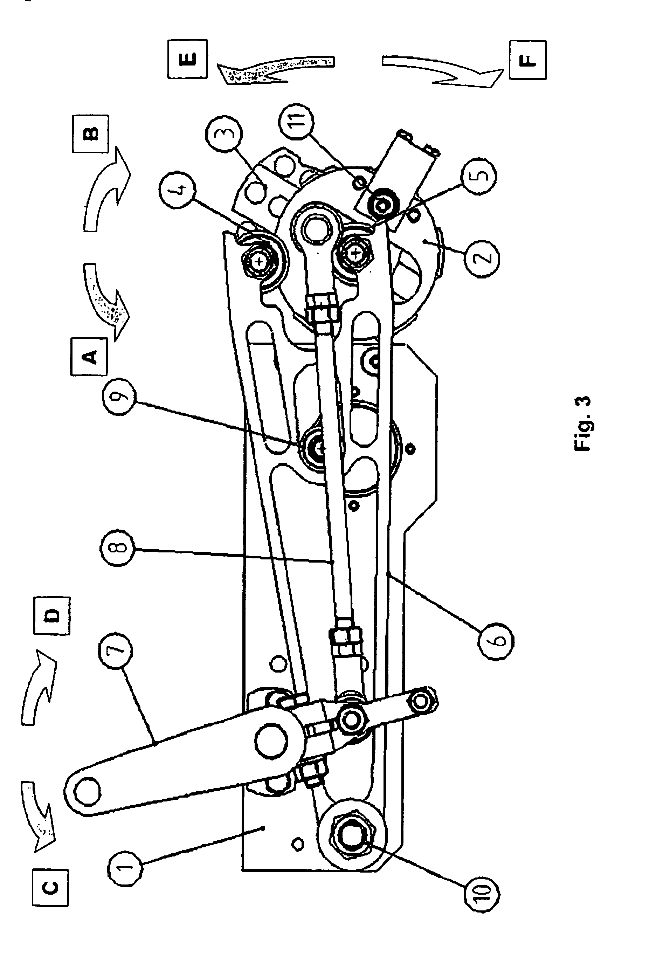

Fig. 2 zeigt dieselbe Lenksinn-Umschalteinrichtung 20 mit Schaltstellung "oben", Lenksinn "vorwärts" und Lenkwinkel 0°. Der Rastmechanismus 11 ist freigegeben. Ein Verdrehen des Lenkrades ist nunmehr, wie beispielsweise in Fig. 3 dargestellt, möglich.

In Fig. 3, Lenksinn "vorwärts" und Lenkwinkel "30°" wird eine Lenkbewegung in Richtung "B" vorgenommen, bei der der exzentrische Knaggen der Kulisse 3 tangential um das koaxiale Schattlger 5 schwenkt (Richtung "E"). Die Schwenkbewegung wird mittels Anlenkstange 8 auf den Anlenkhebel 7 in Richtung "C" übertragen.

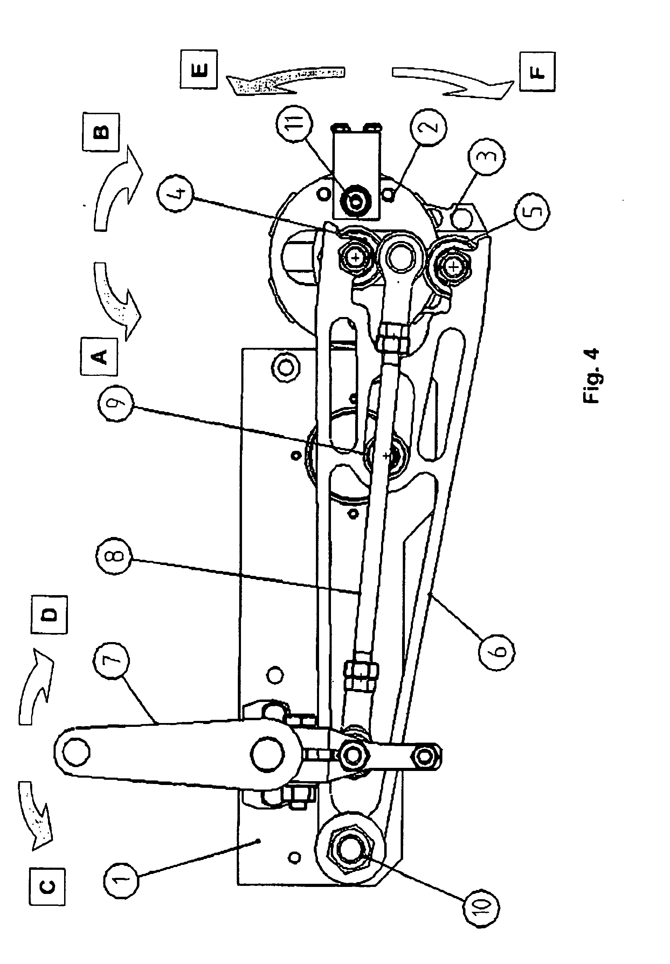

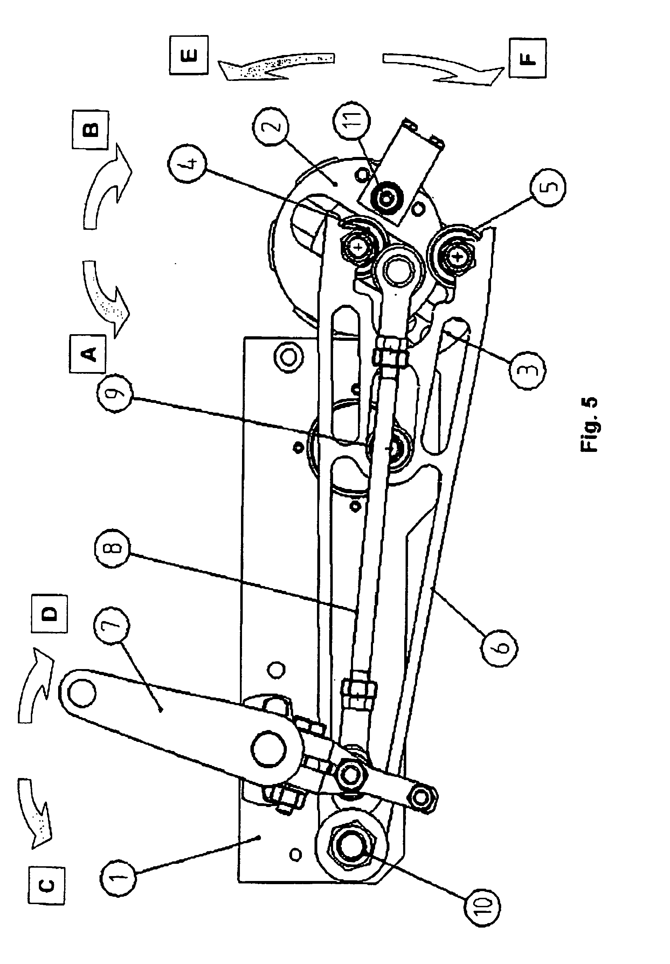

Beim Fahren einer Kurve Rückwärts wird, wie in Fig. 4 aufgezeigt (Lenksinn "rückwärts" und Lenkwinkel "0°"), die Schaltklaue 6 mit ihren zwei Schaltlagern 4. 5 um den Schaltklauendrehpunkt 10 durch die exzentrische Kurbelanlenkung 9, die in der Langlochführung läuft, nach unten umgeschaltet in Richtung "F". Dadurch ergibt sich eine Richtungsumkehr des Anlenkhebelausschlags in Richtung "D" bei gleicher Lenkbetätigungsrichtung in Richtung "B", wie in Fig. 5 (Lenksinn "rückwärts", Lenkwinkel "30°"). Hierbei dreht der Knaggen der Kulisse 3 tangential um das obere Schaltlager 4.

Selbiges läuft ab, wenn eine Lenkbewegung in Richtung "A" vorgenommen wird. Bei einer Vorwärtsfahrt wird der Anlenkhebel 7 in Richtung "D" verschwenkt. Für die Rückwärtsfahrt wird die Kurbelanlenkung 9 nach oben umgeschaltet, so dass sich eine Richtungsumkehr des Anlenkhebelausschlages in Richtung "C" ergibt

Der Antrieb der Kurbelanlenkung 9 von ± 90° für die Schaltklaue 6 erfolgt über eine Zahnrad-Zahnstangen-Kombination, die manuell über einen Schalthebel mit den Stellungen "Vorwärts - Neutral - Rückwärts" in bekannter Art und Weise realisiert wird.

Bei dem internen Rastmechanismus 11 kann es sich um einen stiftförmigen Raster oder aber auch um einen elektrischen Raster, beispielsweise Tastschalter, handeln.

## Patentansprüche

1. Einrichtung zum Steuern einer Lenkung insbesondere für Gleis- und Kettenfahrzeuge, wobei eine Lenksinn-Umschalteinrichtung (20) zwischen einem Lenkrad oder dergleichen zur Steuerung des Fahrzeugs und einem Lenkgetriebe, das als Teil des Fahrzeugantriebs ausgebildet ist, eingebunden ist, so dass bei Kurvenfahrten für die Vorwärtsfahrt als auch die Rückwärtsfahrt das Lenkrad gleichsinnig verstellt wird, **dadurch gekennzeichnet, dass**
- die Lenksinn-Umschalteinrichtung (20) im Wesentlichen aus einer Kulisse (3) mit einer Führung (2) sowie einen Rastmechanismus (11) besteht, wobei
- die Führung (2) fest mit einer Lenkwelle des Lenkrades verbunden ist,
- mit der Kulisse (3) ein oberes Schaltlager (4) sowie ein unteres Schaltlager (5) einer Schaltklaue (6) funktional zusammenwirken, wobei
- das untere Schaltlager (5) der Schaltklaue (6) sich in einer Neutralstellung mit seiner Mittellage fluchtend zur Mittelachse der Lenkwelle befindet,
- die Schaltklaue (6) ihrerseits über eine Kurbelanlenkung (9) mit einer Anlenkstange (8) und einem Anlenkhebel (7) mit dem Lenkgetriebe funktional in Verbindung steht, und
- die Schaltklaue (6) um einen Schaltklauendrehpunkt (10) verdrehbar ist, wobei
- die wesentlichen Teile der Lenksinn-Umschalteinrichtung (20) von der Lenkbewegung vollständig entkoppelt sind.

2. Einrichtung nach Anspruch 1, **dadurch gekennzeichnet, dass** die Kulisse (3) in ihrer Auslenkung mechanisch durch das Nutende in der Führung (2) und durch einer der Schaltlager (4, 5) eingespannt ist.

3. Einrichtung nach Anspruch 1 oder 2, **dadurch gekennzeichnet, dass** die drei Schaltstellungen Vorwärts / Rückwärts / Neutral rastend ausgelegt und in den Stellungen Vorwärts / Rückwärts selbst hemmend sind, so dass äußere Krafteinwirkungen aufgrund der Totpunktlage (0° / 180°) der Exzenteranlenkung unwirksam bleiben.

4. Einrichtung nach Anspruch 3, **dadurch gekennzeichnet, dass** auf Federelemente für die Fixierung der Betätigungselemente verzichtet werden kann.

5. Einrichtung nach einem der Ansprüche 1 bis 4, **dadurch gekennzeichnet, dass** der Antrieb der Kurbelanlenkung (9) von ± 90° für die Schaltklaue (6) über eine Zahnrad-Zahnstangen-Kombination erfolgt, die manuell über einen Schalthebel mit den Stellungen "Vorwärts - Neutral - Rückwärts" eingestellt wird.

6. Einrichtung nach einem der Ansprüche 1 bis 5, **dadurch gekennzeichnet, dass** der Rastmechanismus (11) ein stiftförmiger Raster oder ein elektrischer Raster, beispielsweise eine Tastschalter, ist.

## Claims

1. Device for controlling a steering system, in particular for rail vehicles or track-laying vehicles, wherein a steering-direction-changing device (20) is integrated between a steering wheel or the like for controlling the vehicle and steering gear which is embodied as part of the vehicle drive, with the result that during cornering the steering wheel is adjusted in the same direction for forward travel as well as for reverse travel, **characterized in that** the steering-direction-changing device (20) is comprised essentially of a sliding block (3) with a guide (2) and a latching mechanism (11),
wherein
- the guide (2) is permanently connected to a steering shaft of the steering wheel,
- an upper shift bearing (4) and a lower shift bearing (5) of a shift dog (6) interact functionally with the sliding block (3), wherein
- the lower shift bearing (5) of the shift dog (6) is located in a neutral position with its central bearing aligned with the central axis of the steering shaft,
- the shift dog (6) is itself functionally connected to the steering gear via a crank coupling (9) with a coupling rod (8) and a coupling lever (7), and
- the shift dog (6) can be rotated about a shift dog centre of rotation (10), wherein
- the significant parts of the steering-direction-changing device (20) are decoupled completely from the steering movement.

2. Device according to Claim 1, **characterized in that** the sliding block (3) is clamped in mechanically in its deflection by the groove end in the guide (2) and by one of the shift bearings (4, 5).

3. Device according to Claim 1 or 2, **characterized in that** the three forward/reverse/neutral shift positions are configured in a latching fashion and are self-locking in the forward/reverse positions, with the result that external force effects owing to the dead centre position (0°/180°) of the eccentric coupling remain ineffective.

4. Device according to Claim 3, **characterized in that** spring elements for securing the actuation elements can be dispensed with.

5. Device according to one of Claims 1 to 4, **characterized in that** the drive of the crank coupling (9) of ± 90° is provided for the shift dog (6) by means of a gearwheel-steering rack combination which is set manually by means of a shift lever with the forward/neutral/reverse positions.

6. Device according to one of Claims 1 to 5, **characterized in that** the latching mechanism (11) is a pin-shaped catch device or an electric catch device, for example a pushbutton key.

## Revendications

1. Dispositif de commande d'une direction, notamment pour des véhicules sur rail et à chenilles, dans lequel un dispositif d'inversion du sens de direction (20) est incorporé entre un volant de direction ou similaire pour la commande du véhicule et un mécanisme de direction qui est réalisé sous forme de partie de l'entraînement du véhicule, de telle sorte que dans des conduites en virage pour la marche avant ainsi que pour la marche arrière, le volant de direction soit tourné dans le même sens, **caractérisé en ce que** le dispositif d'inversion du sens de direction (20) se compose essentiellement d'une coulisse (3) avec un guide (2) et un dispositif d'encliquetage (11),
- le guide (2) étant connecté fixement à un arbre de direction du volant de direction,
- un palier de commutation supérieur (4) et un palier de commutation inférieur (5) d'une griffe de commutation (6) coopérant de manière fonctionnelle avec la coulisse (3),
- le palier de commutation inférieur (5) de la griffe de commutation (6) se trouvant dans une position neutre avec sa position centrale en affleurement avec l'axe médian de l'arbre de direction,
- la griffe de commutation (6) étant pour sa part en liaison fonctionnelle avec le mécanisme de direction par le biais d'une liaison articulée à manivelle (9) avec une barre articulée (8) et un levier articulé (7), et
- la griffe de commutation (6) pouvant tourner autour d'un centre de rotation de griffe de commutation (10),
- les parties essentielles du dispositif d'inversion du sens de direction (20) étant complètement désaccouplées du mouvement de direction.

2. Dispositif selon la revendication 1, **caractérisé en ce que** la coulisse (3) est serrée lors de sa déviation mécaniquement par l'extrémité de rainure dans le guide (2) et par l'un des paliers de commutation (4, 5).

3. Dispositif selon la revendication 1 ou 2, **caractérisé en ce que** les trois positions de commutation marche avant, marche arrière et neutre sont conçues avec encliquetage et sont autobloquantes dans les positions de marche avant/marche arrière, de sorte que des applications de forces extérieures restent sans effet du fait de la position de point mort haut (0°/180°) de la liaison articulée excentrée.

4. Dispositif selon la revendication 3, **caractérisé en ce que** l'on peut se passer d'éléments de ressort pour la fixation des éléments d'actionnement.

5. Dispositif selon l'une quelconque des revendications 1 à 4, **caractérisé en ce que** l'entraînement de la liaison articulée à manivelle (9) de ± 90° pour la griffe de commutation (6) a lieu par le biais d'une combinaison de roue dentée-crémaillère, qui est ajustée manuellement par le biais d'un levier de commutation avec les positions "marche avant - neutre - marche arrière".

6. Dispositif selon l'une quelconque des revendications 1 à 5, **caractérisé en ce que** le mécanisme d'encliquetage (11) est un cliquet en forme de goupille ou un cliquet électrique, par exemple un commutateur à touche.
